# EUROPEAN PATENT APPLICATION

(11) **EP 4 794 159 A1**
(43) Date of publication of application: **19.08.2026**
(21) Application number: 24876100.9
(22) Date of filing: 21.06.2024
(51) Int. Cl.: H02J 7/00, H01M 10/44, H01M 10/48, H01M 10/42

(54) **ENERGY STORAGE SYSTEM SWITCHING MANAGEMENT METHOD**

(30) Priority: 13.10.2023 CN 202311331905
(71) Applicant: Sungrow Power Supply Co., Ltd., Hefei, Anhui 230088 (CN)
(72) Inventor: LIANG, Dongyu, Hefei, Anhui 230088 (CN); LI, Qing, Hefei, Anhui 230088 (CN); ZHAO, Yunfei, Hefei, Anhui 230088 (CN); HU, Yongbing, Hefei, Anhui 230088 (CN); HAN, Chen, Hefei, Anhui 230088 (CN)
(74) Representative: Zacco Norway AS
(86) International application number: PCT/CN2024/100600
(87) International publication number: WO 2025/077277

(57) **Abstract**

Disclosed in the present invention is an energy storage system switching management method, comprising: determining a working state of each battery system on the basis of the current of each battery system, wherein the working state includes a static state, a charging state and a discharging state; for the battery systems in the static state, carrying out static open-circuit voltage calibration on the battery systems; for the battery systems in the charging state, carrying out switching management on the charging process of each battery system on the basis of the total battery voltage or the state of charge of each battery system; and for the battery systems in the discharging state, carrying out switching management on the discharging process of each battery system on the basis of the total battery voltage or the state of charge of each battery system. Therefore, according to the present invention, different working states can be accurately distinguished, and then corresponding switching management is carried out on the basis of different working conditions, so that the efficiency is relatively high, and the effect of switching management is good.

## Description

The present application claims the priority to Chinese Patent Application No. 202311331905.2, titled "ENERGY STORAGE SYSTEM SWITCHING MANAGEMENT METHOD", filed on October 13, 2023 with the China National Intellectual Property Administration, which is incorporated herein by reference in its entirety.

### FIELD

The present disclosure relates to the field of energy storage, and in particular to a switching management method for an energy storage system.

### BACKGROUND

To meet a demand for battery capacity expansion and improve applicability for multi-battery application scenarios, current energy storage battery expansion systems adopt a solution of parallel connection of multiple battery systems. An energy storage system with parallel-connected multiple battery systems requires automatic switching management to maximize the role of the energy storage system. Therefore, how to perform switching management on each battery system quickly and accurately becomes a technical issue to be addressed by those skilled in the art.

### SUMMARY

In view of the above problem, a switching management method for an energy storage system that overcomes the above problem or at least partially solves the above problems is provided according to the present disclosure.

A switching management method for an energy storage system includes:
determining an operating state of each of battery systems based on a real-time current of each of the battery systems, where the operating state includes a rest state, a charging state, or a discharging state;
performing, for a battery system in the rest state, static open-circuit voltage calibration on the battery system;
performing, for a battery system in the charging state, switching management for a charging process on the battery system based on a total battery voltage or a state of charge of the battery system; and
performing, for a battery system in the discharging state, switching management for a discharging process on the battery system based on a total battery voltage or a state of charge of the battery system.

In some embodiments, the determining an operating state of each of battery systems based on a real-time current of each of the battery systems includes:
determining, for any of the battery systems, the battery system as being in the charging state in response to the real-time current of the battery system being greater than a first current threshold, where the first current threshold is a positive number;
determining, for any of the battery systems, the battery system as being in the discharging state in response to the real-time current of the battery system being less than a second current threshold, where the second current threshold is a negative number; and
determining, for any of the battery systems, whether the battery system is in the rest state based on a last power-off time instant, a current power-on time instant, and a current voltage of the battery system, in response to the real-time current of the battery system being not less than the second current threshold and not greater than the first current threshold.

In some embodiments, the determining whether the battery system is in the rest state based on a last power-off time instant, a current power-on time instant, and a current voltage of the battery system includes:
determining the battery system as being in the rest state in response to a time difference between the current power-on time instant of the battery system and the last power-off time instant of the battery system being greater than a preset time threshold and the current voltage satisfying a first voltage difference condition, where the first voltage difference condition is that a voltage difference between the current voltage and an open-circuit voltage of the battery system is within a first preset voltage difference range.

In some embodiments, the performing, for battery systems in the rest state, static open-circuit voltage calibration on the battery systems includes:
performing, for the battery system in the rest state, static open-circuit voltage calibration on the battery system based on an open-circuit voltage of the battery system to obtain a state of charge of the battery system.

In some embodiments, after the performing, for a battery system in the rest state, static open-circuit voltage calibration on the battery system, the method further includes:
setting a calibration flag corresponding to the battery system to a specified value;
performing, in response to calibration flags of all battery systems being set to the specified value, switching management for a rest process based on states of charge of the battery systems; and
performing switching management for a rest process based on average cell voltages of the battery systems in response to a calibration flag of at least one battery system being not set to the specified value, where the average cell voltage is an average voltage of cells in each of the battery systems.

In some embodiments, the performing switching management for a rest process based on states of charge of the battery systems includes:
performing, for battery systems satisfying a state of charge condition, switching management for the rest process sequentially on the battery systems satisfying the state of charge condition in ascending order of state of charge, where the state of charge condition is that a state of charge difference between a state of charge of a battery system and a minimum state of charge is within a preset state of charge difference range, where the minimum state of charge is a minimum value among the states of charge of the battery systems.

In some embodiments, the performing switching management for a rest process based on average cell voltages of the battery systems includes:
performing, for battery systems satisfying a second voltage difference condition, switching management for a rest process sequentially on the battery systems satisfying the second voltage difference condition in ascending order of average cell voltage, where the second voltage difference condition is that a voltage difference between an average cell voltage of a battery system and a minimum average cell voltage is within a second preset voltage difference range, where the minimum average cell voltage is a minimum value among the average cell voltages of the battery systems satisfying the state of charge voltage difference condition.

In some embodiments, the performing, for a battery system in the charging state, switching management for a charging process on the battery system based on a total battery voltage or a state of charge of the battery system includes:
charging, for any battery system in the charging state, the battery system with a third current threshold as a charging current in response to the total battery voltage of the battery system satisfying a third voltage difference condition and there being currently a battery system to be switched in, where the third voltage condition is that a voltage difference between the total battery voltage of the battery system and a total battery voltage of the battery system to be switched in is within a third preset voltage difference range; and
jointly charging the battery system to be switched in and the battery system satisfying the third voltage condition in response to the total battery voltage of each battery systems satisfying the third voltage condition being greater than the total battery voltage of the battery systems to be switched in.

In some embodiments, the performing, for a battery system in the charging state, switching management for a charging process on the battery system based on a total battery voltage or a state of charge of the battery system includes:
sorting battery systems in the charging state based on states of charge to obtain a first system sequence in response to there being currently no battery system to be switched in; and
charging a battery system with a minimum state of charge in the first system sequence with a fourth current threshold as a charging current, and removing, in response to the state of charge of the battery system with the minimum state of charge increasing to 100%, the battery system with the minimum state of charge from the first system sequence to update the first system sequence, and repeating the process until states of charge of all the battery systems increase to 100%, where the fourth current threshold is pre-obtained by looking up a table based on a maximum state of charge in the first system sequence.

In some embodiments, the performing, for a battery system in the charging state, switching management for a charging process on the battery system based on a total battery voltage or a state of charge of the battery system includes:
sorting battery systems in the charging state based on states of charge;
charging the battery systems sequentially starting from a battery system with a minimum state of charge; and
jointly charging a battery system to be switched in and the battery systems in the charging state in response to a state of charge of none of the battery systems in the charging state being less than a state of charge of the battery system to be switched in.

In some embodiments, performing, for a battery system in the discharging state, switching management for a discharging process on the battery system based on a total battery voltage or a state of charge of the battery system includes:
discharging, for the battery system in the discharging state, the battery system with a fifth current threshold as a discharging current in response to a total battery voltage of the battery system satisfying a fourth voltage difference condition, where the fourth voltage condition is that a voltage difference between the total battery voltage of the battery system and a total battery voltage of a battery system to be switched in is within a fourth preset voltage difference range; and
jointly discharging the battery system to be switched in and the battery system satisfying the fourth voltage condition in response to a total battery voltage of each battery system satisfying the fourth voltage condition being not greater than the total battery voltage of the battery system to be switched in.

In some embodiments, the performing, for a battery system in the discharging state, switching management for a discharging process on the battery system based on a total battery voltage or a state of charge of the battery system includes:
sorting battery systems in the charging state based on states of charge to obtain a second system sequence; and
discharging a battery system with a maximum state of charge in the second system sequence with a sixth current threshold as a discharging current, and removing the battery system with the maximum state from the second system sequence to update the second system sequence in response to a state of charge of the battery system with the maximum state of charge decreasing to N%, and repeating the process until the states of charge of all the battery systems decrease to N%, where the sixth current threshold is obtained by looking up a table based on a minimum state of charge in the second system sequence.

In some embodiments, the performing, for a battery system in the discharging state, switching management for a discharging process on the battery system based on a total battery voltage or a state of charge of the battery system includes:
sorting battery systems in the discharging state based on states of charge of the battery systems;
charging the battery systems sequentially starting from a battery system with a maximum state of charge; and
jointly discharging a battery system to be switched in and the battery systems in the discharging state in response to a state of charge of none of the battery systems in the discharging state being greater than a state of charge of the battery system to be switched in.

By means of the above technical solutions, in the switching management method for the energy storage system according to the present disclosure, an operating state of each of battery systems is determined based on a current at present of each of the battery systems, where the operating state includes a rest state, a charging state, and a discharging state; for battery systems in the rest state, static open-circuit voltage calibration is performed on the battery systems; for battery systems in the charging state, switching management for a charging process is performed on each of the battery systems based on a total battery voltage or a state of charge of each of the battery systems; and for battery systems in the discharging state, switching management for a discharging process is performed on each of the battery systems based on a total battery voltage or a state of charge of each of the battery systems. Therefore, it can be seen that, according to the present disclosure, different operating states can be accurately distinguished, and then switching management is carried out based on different operating conditions, so that the efficiency is relatively high, and the effect of switching management is good.

The above description is merely an overview of the technical solution of the present disclosure. In order to better understand the technical means of the present disclosure, the present disclosure can be implemented in accordance with the contents of the specification, and in order to make the above and other objects, features, and advantages of the present disclosure to be understood more clearly, specific embodiments of the present disclosure are referred as below.

### BRIEF DESCRIPTION OF THE DRAWINGS

By reading the detailed description of preferred embodiments below, various other advantages and benefits are clear to those skilled in the art. The drawings are only intended for illustrating the preferable embodiments, not limiting the present disclosure. Moreover, throughout the accompanying drawings, same reference numerals represent identical components. In the accompanying drawings:
FIG. 1 is a flowchart of a first switching management method for an energy storage system according to the present disclosure;
FIG. 2 is a flowchart of a second switching management method for an energy storage system according to the present disclosure;
FIG. 3 is a flowchart of a third switching management method for an energy storage system according to the present disclosure;
FIG. 4 is a flowchart of a fourth switching management method for an energy storage system according to the present disclosure;
FIG. 5 is a flowchart of a fifth switching management method for an energy storage system according to the present disclosure;
FIG. 6 is a flowchart of a six switching management method for an energy storage system according to the present disclosure;
FIG. 7 is a flowchart of a seven switching management method for an energy storage system according to the present disclosure;
FIG. 8 is a flowchart of an eight switching management method for an energy storage system according to the present disclosure;
FIG. 9 is a flowchart of a nine switching management method for an energy storage system according to the present disclosure; and
FIG. 10 is a schematic structural diagram of an electronic device according to the present disclosure.

### DETAILED DESCRIPTION

Exemplary embodiments of the present disclosure are described in detail below with reference to the drawings. Although the exemplary embodiments of the present disclosure are shown in the drawings, it should be understood that the present disclosure may be implemented in various manners and is not limited to the embodiments described herein. These embodiments are provided for a more thorough understanding of the present disclosure and to entirely convey the scope of the present disclosure to those skilled in the art.

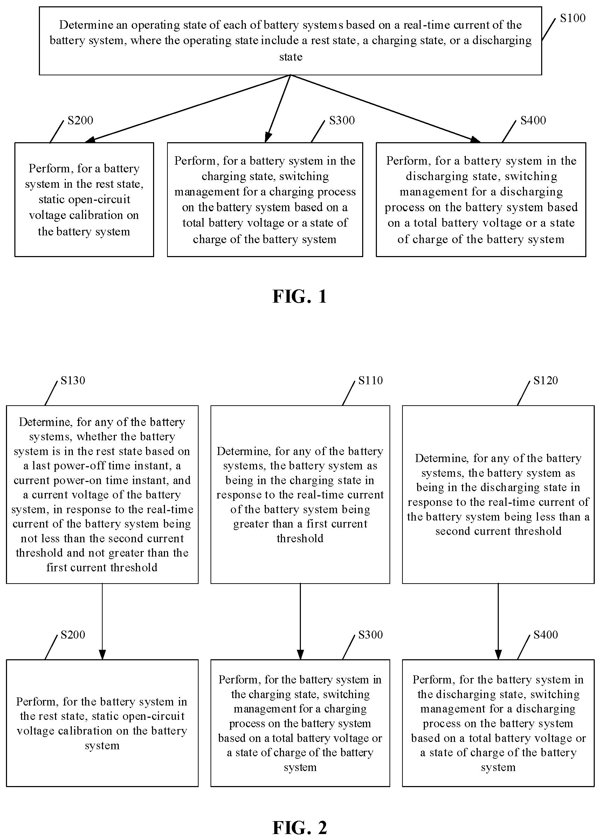

As shown in FIG. 1, a switching management method for an energy storage system is provided according to the present disclosure, and the method includes step S100, step S200, step S300, and step S400.

In step S100, an operating state of each of battery systems is determined based on a real-time current of each of the battery systems, where the operating state includes a rest state, a charging state, or a discharging state.

In embodiments, the battery systems described in the present disclosure may include multiple battery systems, and each of the battery systems may include multiple cells. The battery systems may be connected to each other in parallel. In response to a battery capacity expansion demand, with the present disclosure, each of the battery systems is controlled to switch in for operation to increase the battery capacity of the energy storage system and improve applicability for multi-battery application scenarios.

In embodiments, the rest state described in the present disclosure refers to: a battery system being switched out of the energy storage system and having been resting for a period of time. The charging state described in the present disclosure refers to: a battery system currently being in a charging process. The discharging state described in the present disclosure refers to: a battery system currently being in a discharging process.

In embodiments, the present disclosure does not specifically limit a determination process for the above operating states such as the rest state, the charging state, and the discharging state. For example, as shown in FIG. 2, in some embodiments, step S100 includes: step S110, step S120, and step S130.

In step S110, for any of the battery systems, the battery system is determined as being in the charging state in response to a real-time current of the battery system being greater than a first current threshold.

The first current threshold is a positive number.

In embodiments, the present disclosure does not specifically limit the first current threshold, which may be set based on actual needs. For example, the first current threshold is set to 0.5A (ampere) in the present disclosure, which is not limited herein.

In step S120, for any of the battery systems, the battery system is determined as being in the discharging state in response to the real-time current of the battery system being less than a second current threshold.

The second current threshold is a negative number.

In embodiments, the present disclosure does not specifically limit the second current threshold, and may be set based on actual needs. For example, the second current threshold may be set to -0.5A (Ampere) in the present disclosure, which is not limited herein.

In step S130, for any of the battery systems, whether the battery system is in the rest state is determined based on a last power-off time instant, a current power-on time instant, and a current voltage of the battery system in response to the real-time current of the battery system being not less than the second current threshold and not greater than the first current threshold.

It should be noted that current is directional. A current greater than 0.5A indicates the battery system is charging; a current less than -0.5A (for example, a current of -0.6A) indicates the battery system is discharging; and a current between -0.5A and 0.5A indicates the battery system is possibly resting.

In embodiments, there is no execution order among step S110, step S120, and step S130, and the three steps are alternative to each other. That is, at the same moment, any of step S110, step S120, and step S130 may be executed in the present disclosure, which is not limited herein.

In embodiments, each power-on time instant and each power-off time instant of each of the battery systems may be recorded, and a current voltage of each of the battery systems in real time may be acquired in the present disclosure. A duration of rest of a battery system may be determined through a last power-off time instant and a current power-on time instant. That is, with the present disclosure, a time difference between the current power-on time instant and the last power-off time instant may be calculated. The time difference being greater than 1 hour indicates the battery system is possibly in a rest state.

For example, in some embodiments, step S130 includes: step 1.1.

In step 1.1, the battery system is determined as being in the rest state in response to a time difference between the current power-on time instant of the battery system and the last power-off time instant of the battery system being greater than a preset time threshold and the current voltage satisfying a first voltage difference condition, where the first voltage difference condition is that a voltage difference between the current voltage and an open-circuit voltage of the battery system is within a first preset voltage difference range.

In embodiments, the present disclosure does not specifically limit the preset time threshold, which may be set based on actual needs. For example, the preset time threshold may be set to 1 hour in the present disclosure, which is not limited herein.

In embodiments, the present disclosure does not specifically limit the first preset voltage difference range, which may be set based on actual needs. For example, the first preset voltage difference range may be set to: less than a value approximated to 0 in the present disclosure. That is, in response to the time difference being greater than the preset time threshold and the current voltage being close to the open-circuit voltage, the battery system is considered to satisfy the first voltage difference condition.

In embodiments, in response to the time difference being not greater than the preset time threshold or the current voltage being not close to the open-circuit voltage, the battery system is considered not to be in the rest state and possibly in another state. For a battery system not in the rest state, subsequent static open-circuit voltage calibration is not required. For a battery system in the rest state, the static open-circuit voltage calibration is performed on the battery system in the present disclosure.

In step S200, for a battery system in the rest state, static open-circuit voltage calibration is performed on the battery system.

In embodiments, the static open-circuit voltage calibration is also referred to as static calibration of OCV (Open Circuit Voltage), or static calibration of SOC (State of Charge)-OCV curve. A specific process thereof is shown in the following embodiments, which is not limited in the present disclosure.

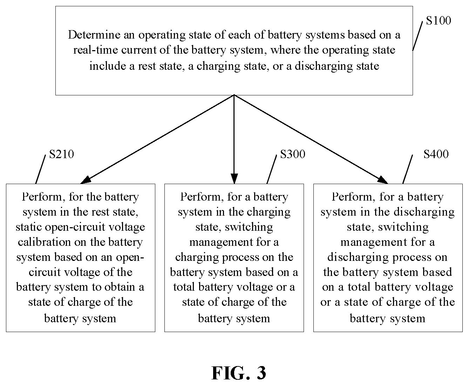

As shown in FIG. 3, in some embodiments, step S200 includes step S210.

In step S210, for the battery system in the rest state, static open-circuit voltage calibration is performed on the battery system based on the open-circuit voltage of the battery system, to obtain a state of charge of the battery system.

In embodiments, during the static open-circuit voltage calibration, SOC data and OCV data are required. In the present disclosure, SOC data of a current cell is obtained by linear interpolation on a voltage of a cell of the battery system, and calibrated state of charge is obtained through the static open-circuit voltage calibration on the battery system based on the open-circuit voltage of the battery system.

In embodiments, for any of the battery systems, after performing the static open-circuit voltage calibration on the battery system, in the present disclosure, a calibration flag is set to a specified value (for example, "1") to facilitate sending the value of the calibration flag to a bus.

That is, in some embodiments, after S200, the method further includes: step 2.1, step 2.2, and step 2.3.

In step 2.1, the calibration flag corresponding to the battery system is set to the specified value.

In step 2.2, switching management for a rest process is performed based on states of charge of the battery systems in response to calibration flags of all the battery systems being set to the specified value.

In embodiments, the calibration flags of all battery systems on the bus being set to the specified value indicates that the battery systems all have undergone the static open-circuit voltage calibration. Thus, switching management for a rest process may be performed on the battery systems in the present disclosure.

In embodiments, the present disclosure does not specifically limit the switching management for a rest process, and any feasible method falls within the protection scope of the present disclosure.

For example, in some embodiments, the performing switching management for a rest process based on states of charge of the battery systems in step 2.2 includes: step 2.21.

In step 2.21, for battery systems satisfying a state of charge condition, switching management for a rest process is performed sequentially on the battery systems satisfying the state of charge condition in ascending order of state of charge, where the state of charge condition is: a state of charge difference between a state of charge of a battery system and a minimum state of charge is within a preset state of charge difference range, where the minimum state of charge is a minimum value among the states of charge of the battery systems.

In embodiments, the present disclosure does not specifically limit the preset state of charge difference range, which may be set based on actual needs. For example, in the present disclosure, the preset state of charge difference range may be set to: not greater than 5%, that is, state of charge difference divided by minimum state of charge being not greater than 5%, which indicates that a corresponding battery system satisfies the state of charge condition.

In embodiments, for the battery systems satisfying the state of charge condition, in the present disclosure, the battery systems may be sorted in sequence based on states of charge, either in ascending order or descending order. Then, from a battery system with a small state of charge, the battery systems are switched into the energy storage system sequentially, that is, the battery systems are connected to the energy storage system to start operation, which is not limited in the present disclosure.

In step 2.3, switching management for a rest process is performed based on respective average cell voltages of the battery systems in response to a calibration flag of at least one battery system being not set to the specified value, where the average cell voltage is an average voltage of cells included in a respective one of the battery systems.

In embodiments, in response to a calibration flag of at least one battery system on the bus is not set to the specified value, that is, at least one battery system undergoes no static open-circuit voltage calibration, the average cell voltage may be calculated first in the present disclosure. It should be noted that a battery system may include multiple cells, and an average cell voltage is calculated for each of the battery systems. That is, in the present disclosure, an average cell voltage of a battery system may be calculated based on voltages of cells of the battery system, thereby obtaining an average cell voltage of each of the battery systems, which is not limited herein.

In embodiments, after the respective average cell voltages of the battery systems are obtained through calculation in the present disclosure, the minimum average cell voltage may be determined to facilitate subsequent switching management for a rest process on any of the battery systems based on a corresponding average cell voltage and the minimum average cell voltage.

For example, in some embodiments, the performing switching management for a rest process based on average cell voltages of the battery systems in step 2.3 includes: step 2.31.

In step 2.31, for battery systems satisfying a second voltage difference condition, switching management for a rest process is sequentially performed on the battery systems satisfying the second voltage difference condition in ascending order of average cell voltage, where the second voltage difference condition is: a voltage difference between an average cell voltage of a battery system and the minimum average cell voltage is within a second preset voltage difference range, where the minimum average cell voltage is a minimum value among the average cell voltages of the battery systems satisfying the state of charge voltage difference condition.

In embodiments, for any of the battery systems, in the present disclosure, a voltage difference between an average cell voltage corresponding to the battery system and the minimum average cell voltage may be calculated. The voltage difference being within the second preset voltage difference range indicates that the battery system satisfies the second voltage difference condition. It should be noted that the present disclosure does not specifically limit the second preset voltage difference range. For example, in the present disclosure, the second preset voltage difference range may be set to: not greater than 500mV (millivolt). That is, battery systems, a voltage difference between an average cell voltage of which and the minimum average cell voltage is not greater than 500mV, may be sorted based on average cell voltages, either in ascending order or descending order, which is not limited in the present disclosure.

In embodiments, after performing the above sorting on the battery systems, the battery systems are sequentially switched into the energy storage system starting from a battery system with a small average cell voltage and start operation in the present disclosure.

In step S300, for a battery system in the charging state, switching management for a charging process is performed on the battery system based on a total battery voltage or a state of charge of the battery system.

In embodiments, battery systems in the charging state may roughly have three operating conditions, and different switching management for a charging processes is performed respectively. The first is a general charging condition, the second is a full charging condition, and the third is an inconsistent SOC condition. The switching management for the charging process under the above three operating conditions is described below respectively.

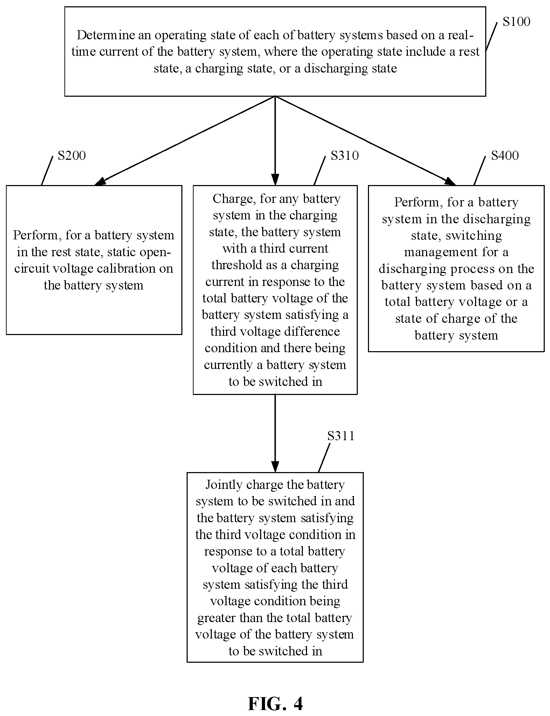

In embodiments, as shown in FIG. 4, in some embodiments, step S300 includes: step S310 and step S311.

In step S310, for any battery system in the charging state, the battery system is charged with a third current threshold as a charging current, in response to the total battery voltage of the battery system satisfying a third voltage difference condition and there being currently a battery system to be switched in.

The third voltage condition is that a voltage difference between the total battery voltage of the battery system and a total battery voltage of the battery system to be switched in is within a third preset voltage difference range.

In embodiments, the battery system to be switched in according to the present disclosure refers to: a battery system which is not connected to the energy storage system for operation. In response to there being multiple battery systems to be switched in, the total battery voltage of the battery system to be switched in according to the present disclosure refers to: an average value of total battery voltages of the battery systems to be switched in, which is not limited herein.

In embodiments, for a battery system in the charging state, the battery system is already in the charging state, and it may be understood that the battery system has been switched into the energy storage system, to distinguish it from a battery system to be switched in, which is not limited herein.

In embodiments, the present disclosure does not specifically limit the third preset voltage difference range, and any feasible implementation thereof falls within the protection scope of the present disclosure. For example, the present disclosure may set the third preset voltage difference range to not greater than 3V (volt), that is, in response to the voltage difference being not greater than 3V and there is a battery system to be switched in, the battery system is charged with the third current threshold as the charging current.

In embodiments, the present disclosure does not specifically limit the third current threshold, which may be set based on actual needs. For example, in the present disclosure, the third current threshold may be set to 3A (Ampere), that is, the battery system is charged with a current of 3A.

In step S311, the battery system to be switched in and the battery system satisfying the third voltage condition are jointly charged, in response to a total battery voltage of each battery system satisfying the third voltage condition being greater than the total battery voltage of the battery system to be switched in.

In embodiments, after being charged, a voltage of the battery system satisfying the third voltage condition is increased and higher than the voltage of the battery system to be switched in. In this case, in the present disclosure, the battery system to be switched in is controlled to switch into the energy storage system to start operation, and the battery system to be switched in and the battery system satisfying the third voltage condition, which is not limited herein.

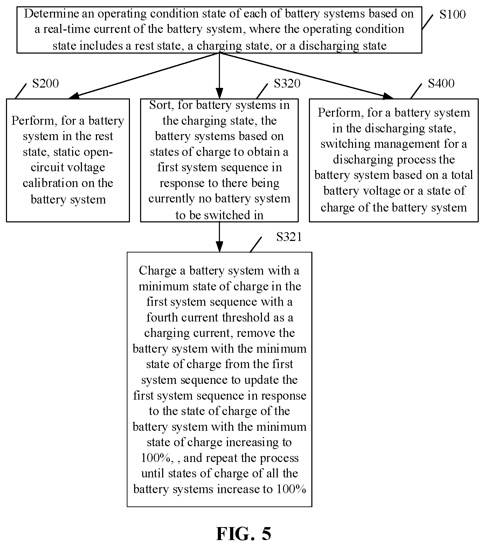

The embodiment of FIG. 4 above shows switching management for a charging process under a general charging condition. FIG. 5 below shows switching management for a charging process under a full charging condition.

As shown in FIG. 5, in some embodiments, step S300 includes: step S320 and step S321.

In step S320, battery systems in the charging state are sorted based on states of charge to obtain a first system sequence, in response to there being currently no battery system to be switched in.

In embodiments, the full charging condition indicates that all systems are switched into the energy storage system, that is, there is currently no battery system to be switched in . Under the full charging condition, in the present disclosure, battery systems may be charged sequentially, and for each charging, only when an SOC of a battery system is charged to 100%, is a next battery system charged. Thus, in the present disclosure, the battery systems may be sorted based on SOCs and then charged sequentially, which is not limited herein.

In practice, according to the present disclosure, the sorting may not be performed. One or more battery systems are charged randomly each time, and after the one or more battery systems are fully charged, other battery systems which are not yet fully charged are charged, until all battery systems are fully charged, which is not limited herein.

In step S321, a battery system with a minimum state of charge in the first system sequence is charged with a fourth current threshold as a charging current, and in response to the state of charge of the battery system with the minimum state of charge increasing to 100%, the battery system with the minimum state of charge is removed from the first system sequence to update the first system sequence, and the process is repeated until the states of charge of all the battery systems increase to 100%.

The fourth current threshold is pre-obtained by looking up a table based on a maximum state of charge in the first system sequence.

In embodiments, during each charging, in the present disclosure, the battery system with the minimum state of charge in the first system sequence is charged. After being fully charged, the battery system is removed from the first system sequence, then the first system sequence has a new battery system with a minimum state of charge, and then the new battery system with the minimum state of charge is charged. The process is repeated until the battery systems in the original first system sequence are all fully charged.

In embodiments, the first system sequence is obtained based on the states of charge, and therefore, there must be a maximum state of charge in the first system sequence. Therefore, in the present disclosure, the fourth current threshold may be obtained by look-up based on the maximum state of charge, which is not limited herein.

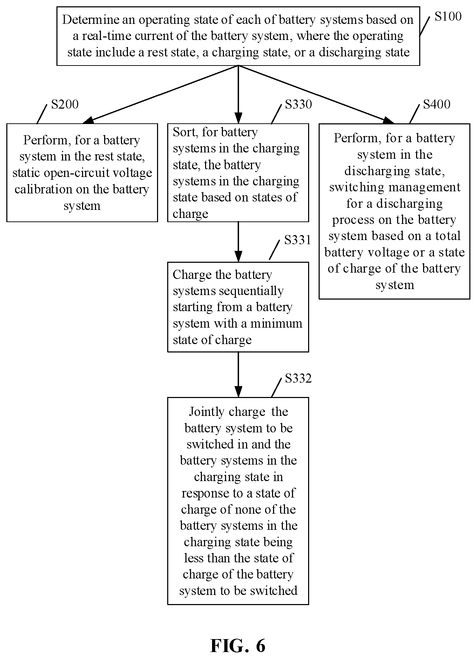

As shown in FIG. 6, in some embodiments, step S300 includes: step S330, step S331, and step S332.

In step S330, battery systems in the charging state are sorted based on states of charge.

In embodiments, for an inconsistent SOC condition, in the present disclosure, the battery systems in the charging state are sorted either in ascending order or descending order of state of charge, to facilitate sequential charging starting from a battery system with the minimum state of charge.

In step S331, the battery systems are charged sequentially starting from a battery system with a minimum state of charge.

In embodiments, during each charging, only one battery system is charged. As the charging proceeds, a state of charge of the battery system increases accordingly. In response to the state of charge of the battery system being not less than a state of charge of a battery system to be switched in, a next battery system is charged, and the process is repeated, until the state of charge of none of the battery systems is less than the state of charge of the battery system to be switched in. It should be noted that since only one battery system is charged at a time, in the present disclosure, battery systems not being charged this time are disconnected, and are switched in when it is their turn to be charged, which is not limited herein.

In step S332, the battery system to be switched in and the battery systems in the charging state are jointly charged, in response to a state of charge of none of the battery systems in the charging state being less than the state of charge of the battery system to be switched in.

In embodiments, in response to the state of charge of none of the battery systems in the charging state being less than the state of charge of the battery system to be switched in, in the present disclosure, the battery system to be switched in and the battery systems in the charging state that have been charged are all switched into the energy storage system to start operation and then are charged jointly, which is not limited herein.

In embodiments, in response to there being multiple battery systems to be switched in, the state of charge of the battery system to be switched in according to the present disclosure refers to: an average value of states of charge of all battery systems to be switched in, which is not limited herein.

In step S400, for a battery system in the discharging state, switching management for a discharging process is performed on the battery system based on a total battery voltage or a state of charge of the battery system.

In embodiments, there is no execution order among step S200, step S300, and step S400, and the three steps are alternative to each other. That is, at the same moment, any of step S200, step S300, and step S400 may be executed in the present disclosure, which is not limited herein.

In embodiments, battery systems in the discharging state may also roughly have three operating conditions, and different switching management for a discharging process is performed respectively. The first is a general discharging condition, the second is a full discharging condition, and the third is an inconsistent SOC condition. The switching management for discharging processes under the above three operating conditions is described below respectively.

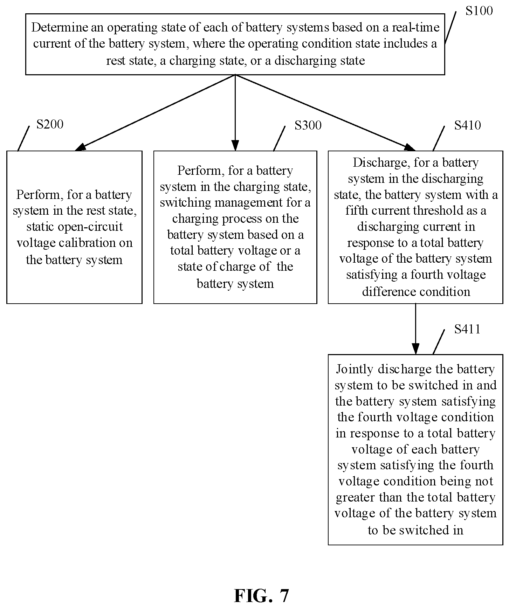

As shown in FIG. 7, in some embodiments, step S400 includes: step S410 and step S411.

In step S410, for the battery system in the discharging state, the battery system is discharged with a fifth current threshold as a discharging current in response to a total battery voltage of the battery system satisfying a fourth voltage difference condition.

The fourth voltage condition is that a voltage difference between the total battery voltage of the battery system and a total battery voltage of a battery system to be switched in is within a fourth preset voltage difference range.

In embodiments, in response to there being multiple battery systems to be switched in, the total battery voltage of the battery system to be switched in according to the present disclosure refers to: an average value of total battery voltages of all battery systems to be switched in, which is not limited herein.

In embodiments, the present disclosure does not specifically limit the fifth current threshold, which may be set based on actual needs. For example, in the present disclosure, the fifth current threshold may be set to 3A. That is, in the present disclosure, the battery system is discharged with a current of 3A, which is not limited herein.

In embodiments, the present disclosure does not specifically limit the fourth preset voltage difference range, which may be set based on actual needs. For example, in the present disclosure, the fourth preset voltage difference range may be set to: not greater than 3V. That is, in response to the voltage difference between the total battery voltage and the total battery voltage of the battery system to be switched in being not greater than 3V, the battery system is discharged with a current of 3A, which is not limited herein.

In step S411, the battery system to be switched in and the battery system satisfying the fourth voltage condition are discharged jointly in response to the total battery voltage of each battery system satisfying the fourth voltage condition being not greater than the total battery voltage of the battery system to be switched in.

In embodiments, the battery system in the discharging state is a battery system which has already been switched into the energy storage system. In response to the total battery voltage of the battery system in the discharging state dropping below the total battery voltage of the battery system to be switched in after discharging, in the present disclosure, the battery system to be switched in may be switched into the energy storage system to start operation, and then are discharged jointly, which is not limited herein.

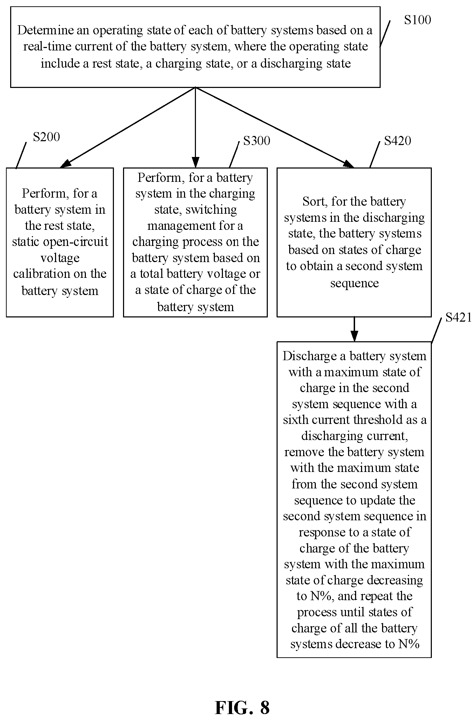

The embodiment of FIG. 7 describes the switching management for a discharging process under a general discharging condition. A switching management for a discharging process under a full discharging condition is described below through an embodiment of FIG. 8.

As shown in FIG. 8, in some embodiments, step S400 includes: step S420 and step S421.

In step S420, battery systems in the discharging state are sorted based on states of charge to obtain a second system sequence.

In embodiments, in the present disclosure, the battery systems in the discharging state may be sorted in ascending order or descending order of state of charge, to obtain the second system sequence, which is not limited herein.

In step S421, a battery system with a maximum state of charge in the second system sequence is discharged with a sixth current threshold as a discharging current, and the battery system with the maximum state of charge is removed from the second system sequence to update the second system sequence in response to a state of charge of the battery system with the maximum state of charge decreasing to N%, and the process is repeated until the states of charge of all the battery systems decrease to N%.

The sixth current threshold is obtained by looking up a table based on a minimum state of charge in the second system sequence.

In embodiments, the present disclosure does not specifically limit N%, which may be set based on actual needs. For example, in the present disclosure, N% may be set to: 5%. That is, during each discharging of a battery system, a state of charge of the battery system decreasing to 5% indicates the battery system has been fully discharged, and a next battery system may be discharged, which is not limited herein.

In embodiments, for each discharging, only one battery system may be discharged, and the battery system is a battery system with a maximum state of charge in the second system sequence currently. After the state of charge of this battery system decreases to 5%, in the present disclosure, the battery system may be removed from the second system sequence to update the second system sequence, thereby leading to a new battery system with a maximum state of charge, and the process is repeated until the states of charge of all the battery systems in the original second system sequence are discharged to 5%, which is not limited herein.

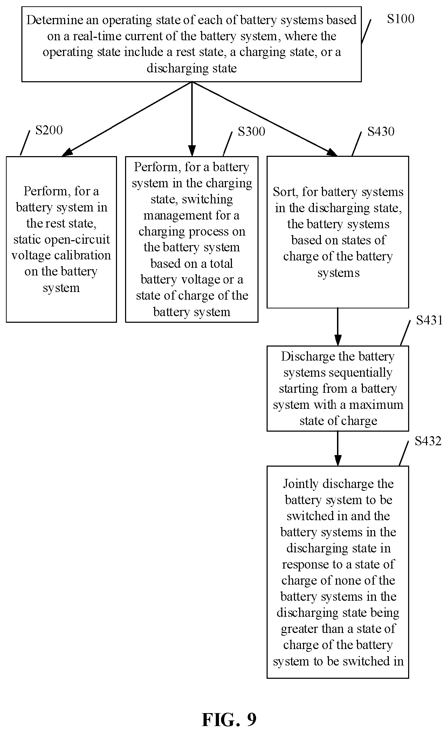

As shown in FIG. 9, in some embodiments, step S400 includes: step S430, step S431, and step S432.

In step S430, the battery systems in the discharging state are sorted based on states of charge of the battery systems.

In embodiments, in the present disclosure, the battery systems in the discharging state are sorted in descending order or ascending order of state of charge, which is not limited herein.

In step S431, the battery systems are discharged sequentially starting from a battery system with a maximum state of charge.

In step S432, the battery system to be switched in and the battery systems in the discharging state are jointly discharged in response to a state of charge of none of the battery systems in the discharging state being greater than a state of charge of the battery system to be switched in.

In embodiments, in the present disclosure, the discharging starts from a battery system with a maximum state of charge preferentially, and during each discharging, only one battery system is discharged. In response to the state of charge of the battery system dropping below the state of charge of the battery system to be switched in, a next battery system is discharged, and the process is repeated until the states of charge of the battery systems in the discharging state are not greater than the state of charge of the battery system to be switched in.

In embodiments, since only one battery system is discharged at a time, battery systems not being discharged currently may be switched out of the energy storage system, and when a corresponding battery system needs to be discharged, the battery system is switched into the energy storage system for discharging

In embodiments, after the state of charge of none of the battery systems in the discharging state is greater than the state of charge of the battery system to be switched in, the battery system to be switched in is switched into the energy storage system to start operation, for joint discharging.

It should be noted that for the inconsistent SOC condition, besides the discharging state and the charging state, there is additionally a rest situation. In the rest situation, each battery system has completed the switching-in process, and there is no battery system to be switched in. Errors have accumulated over the course of long-term use. The rest situation here is merely a no-current situation. In this situation, in the present disclosure, the battery systems may be charged through a photovoltaic system during the daytime when photovoltaic power is strong, in view of the fact that at night without sunlight, the charging current of the battery system draws power from the grid, which may lead users to perceive it as stealing electricity, resulting in a poor user experience.

From the above, the present disclosure can distinguish between different operating states accurately, and then perform corresponding switching management based on different operating conditions, so that the efficiency is relatively high, and the effect of switching management is good.

Furthermore, compared to managing switching of multi-battery systems based on a single dimension of voltage, with the method of the present disclosure, automatic management for each of battery systems under multi-scenario operating conditions is achieved; for inconsistent SOC scenarios, automatic balanced management can be achieved; for the energy storage system, automatic control switching management ensures plug-and-play under operating conditions of multi-battery system supplementation or maintenance.

A computer-readable storage medium is provided according to the present disclosure, and the computer-readable storage medium has a program stored thereon, where the program, when executed by a processor, implements the switching management method for an energy storage system according to any one of the above embodiments.

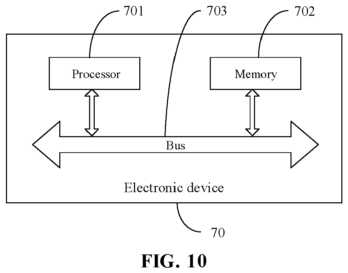

As shown in FIG. 10, an electronic device 70 is provided according to the present disclosure. The electronic device 70 includes at least one processor 701, and at least one memory 702 connected to the processor 701, and a bus 703; where the processor 701 and the memory 702 communicate with each other through the bus 703; the processor 701 is configured to call program instructions in the memory 702 to execute the switching management method for an energy storage system according to any one of the above embodiments.

The relationship terms such as "first", "second" and the like are only used herein to distinguish one entity or operation from another, rather than to necessitate or imply that an actual relationship or order exists between the entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Without more limitations, a factor defined by a sentence "include one..." does not exclude a case that there is another same factor in the process, the method, the object or the device including the described elements.

The embodiments in the specification are described in an associative manner, references may be made among these embodiments with respect to the same or similar portions among these embodiments, and each of the embodiments is mainly focused on describing its differences from other embodiments. In particular, as for the system embodiment, since it is basically same as the method embodiment, the description is relatively simple, and for relevant parts, reference may be made to the description of the method embodiments.

The above description of the disclosed embodiments enables those skilled in the art to implement or use the present disclosure. Various modifications to these embodiments are obvious to those skilled in the art. The general principles defined in the present disclosure may be implemented in other embodiments without departing from the spirit and scope of the present application. Therefore, the present disclosure is not limited to the embodiments shown in the present disclosure but is conformed to the widest scope consistent with the principles and novel features disclosed in the present disclosure.

The foregoing descriptions are merely some preferred embodiments of the present disclosure, but are not used to limit the protection scope of the present disclosure. Any modification, equivalent substitution, or improvement made within the spirit and the principle of the present disclosure shall fall within the protection scope of the present disclosure.

## Claims

1. A switching management method for an energy storage system, wherein the method comprises:
determining an operating state of each of battery systems based on a real-time current of each of the battery systems, wherein the operating state comprises a rest state, a charging state, or a discharging state;
performing, for a battery system in the rest state, static open-circuit voltage calibration on the battery system;
performing, for a battery system in the charging state, switching management for a charging process on the battery system based on a total battery voltage or a state of charge of the battery system; and
performing, for a battery system in the discharging state, switching management for a discharging process on the battery system based on a total battery voltage or a state of charge of the battery system.

2. The method according to claim 1, wherein the determining an operating state of each of battery systems based on a real-time current of each of the battery systems comprises:
determining, for any of the battery systems, the battery system as being in the charging state in response to the real-time current of the battery system being greater than a first current threshold, wherein the first current threshold is a positive number;
determining, for any of the battery systems, the battery system as being in the discharging state in response to the real-time current of the battery system being less than a second current threshold, wherein the second current threshold is a negative number; and
determining, for any of the battery systems, whether the battery system is in the rest state based on a last power-off time instant, a current power-on time instant, and a current voltage of the battery system, in response to the real-time current of the battery system being not less than the second current threshold and not greater than the first current threshold.

3. The method according to claim 2, wherein the determining whether the battery system is in the rest state based on a last power-off time instant, a current power-on time instant, and a current voltage of the battery system comprises:
determining the battery system as being in the rest state in response to a time difference between the current power-on time instant of the battery system and the last power-off time instant of the battery system being greater than a preset time threshold and the current voltage satisfying a first voltage difference condition, wherein the first voltage difference condition is that a voltage difference between the current voltage and an open-circuit voltage of the battery system is within a first preset voltage difference range.

4. The method according to claim 1, wherein the performing, for a battery system in the rest state, static open-circuit voltage calibration on the battery system comprises:
performing, for the battery system in the rest state, static open-circuit voltage calibration on the battery system based on an open-circuit voltage of the battery system to obtain a state of charge of the battery system.

5. The method according to claim 1, wherein after the performing, for a battery system in the rest state, static open-circuit voltage calibration on the battery system, the method further comprises:
setting a calibration flag corresponding to the battery system to a specified value;
performing, in response to calibration flags of all battery systems being set to the specified value, switching management for a rest process based on states of charge of the battery systems; and
performing switching management for a rest process based on average cell voltages of the battery systems in response to a calibration flag of at least one battery system being not set to the specified value, where the average cell voltage is an average voltage of cells in each of the battery systems.

6. The method according to claim 5, wherein the performing switching management for a rest process based on states of charge of the battery systems comprises:
performing, for battery systems satisfying a state of charge condition, switching management for the rest process sequentially on the battery systems satisfying the state of charge condition in ascending order of state of charge, wherein the state of charge condition is that a state of charge difference between a state of charge of a battery system and a minimum state of charge is within a preset state of charge difference range, wherein the minimum state of charge is a minimum value among the states of charge of the battery systems.

7. The method according to claim 5, wherein the performing switching management for a rest process based on average cell voltages of the battery systems comprises:
performing, for battery systems satisfying a second voltage difference condition, switching management for the rest process sequentially on the battery systems satisfying the second voltage difference condition in ascending order of average cell voltage, wherein the second voltage difference condition is that a voltage difference between an average cell voltage of a battery system and a minimum average cell voltage is within a second preset voltage difference range, wherein the minimum average cell voltage is a minimum value among the average cell voltages of the battery systems satisfying the state of charge voltage difference condition.

8. The method according to claim 1, wherein the performing, for a battery system in the charging state, switching management for a charging process on the battery system based on a total battery voltage or a state of charge of the battery system comprises:
charging, for any battery system in the charging state, the battery system with a third current threshold as a charging current in response to a total battery voltage of the battery system satisfying a third voltage difference condition and there being currently a battery system to be switched in, wherein the third voltage condition is that a voltage difference between the total battery voltage of the battery system and a total battery voltage of the battery system to be switched in is within a third preset voltage difference range; and
jointly charging the battery system to be switched in and the battery system satisfying the third voltage condition in response to the total battery voltage of each battery system satisfying the third voltage condition being greater than the total battery voltage of the battery system to be switched in.

9. The method according to claim 1, wherein the performing, for a battery system in the charging state, switching management for a charging process on the battery system based on a total battery voltage or a state of charge of the battery system comprises:
sorting battery systems in the charging state based on states of charge to obtain a first system sequence in response to there being currently no battery system to be switched in; and
charging a battery system with a minimum state of charge in the first system sequence with a fourth current threshold as a charging current, and removing, in response to the state of charge of the battery system with the minimum state of charge increasing to 100%, the battery system with the minimum state of charge from the first system sequence to update the first system sequence, and repeating the process until states of charge of all the battery systems increase to 100%, wherein the fourth current threshold is pre-obtained by looking up a table based on a maximum state of charge in the first system sequence.

10. The method according to claim 1, wherein the performing, for a battery system in the charging state, switching management for a charging process on the battery system based on a total battery voltage or a state of charge of the battery system comprises:
sorting battery systems in the charging state based on states of charge;
charging the battery systems sequentially starting from a battery system with a minimum state of charge; and
jointly charging a battery system to be switched in and the battery systems in the charging state in response to a state of charge of none of the battery systems in the charging state being less than a state of charge of the battery system to be switched in.

11. The method according to claim 1, wherein the performing, for a battery system in the discharging state, switching management for a discharging process on the battery system based on a total battery voltage or a state of charge of the battery system comprises:
discharging, for the battery system in the discharging state, the battery system with a fifth current threshold as a discharging current in response to a total battery voltage of the battery system satisfying a fourth voltage difference condition, wherein the fourth voltage condition is that a voltage difference between the total battery voltage of the battery system and a total battery voltage of a battery system to be switched in is within a fourth preset voltage difference range; and
jointly discharging the battery system to be switched in and the battery system satisfying the fourth voltage condition in response to a total battery voltage of each battery system satisfying the fourth voltage condition being not greater than the total battery voltage of the battery system to be switched in.

12. The method according to claim 1, wherein the performing, for a battery system in the discharging state, switching management for a discharging process on the battery system based on a total battery voltage or a state of charge of the battery system comprises:
sorting battery systems in the charging state based on states of charge to obtain a second system sequence; and
discharging a battery system with a maximum state of charge in the second system sequence with a sixth current threshold as a discharging current, and removing the battery system with the maximum state from the second system sequence to update the second system sequence in response to a state of charge of the battery system with the maximum state of charge decreasing to N%, and repeating the process until the states of charge of all the battery systems decrease to N%, wherein the sixth current threshold is obtained by looking up a table based on a minimum state of charge in the second system sequence.

13. The method according to claim 1, wherein the performing, for a battery system in the discharging state, switching management for a discharging process on the battery system based on a total battery voltage or a state of charge of the battery system comprises:
sorting battery systems in the discharging state based on states of charge of the battery systems;
charging the battery systems sequentially starting from a battery system with a maximum state of charge; and
jointly discharging a battery system to be switched in and the battery systems in the discharging state in response to a state of charge of none of the battery systems in the discharging state being greater than a state of charge of the battery system to be switched in.
